# EUROPÄISCHE PATENTSCHRIFT

(11) **EP 3 334 881 B1**
(45) Veröffentlichungstag und Bekanntmachung des Hinweises auf die Patenterteilung: **24.07.2019**
(21) Anmeldenummer: 15797845.3
(22) Anmeldetag: 04.11.2015
(51) Int. Cl.: E05C 1/00, F16B 19/02, F16B 21/07, E05D 5/16

(54) **GEWINDEFREI INSTALLIERBARER RASTBOLZEN**
THREADING FREE INSTALLABLE DETENT PIN
GOUJON À RESSORT AVEC MONTAGE SANS VISSAGE

(30) Priorität: 10.08.2015 DE 202015005678 U
(43) Veröffentlichungstag der Anmeldung: 20.06.2018
(73) Patentinhaber: Ramsauer, Dieter, 58332 Schwelm (DE)
(72) Erfinder: Ramsauer, Dieter, 58332 Schwelm (DE)
(74) Vertreter: Cohausz & Florack
(86) Internationale Anmeldenummer: PCT/EP2015/002207
(87) Internationale Veröffentlichungsnummer: WO 2017/025112

(56) Entgegenhaltungen:
- EP-A2- 2 175 093
- DE-A1-102007 004 357
- FR-A5- 2 131 470

## Beschreibung

### Gebiet der Erfindung

Die Erfindung betrifft einen Rastbolzen wie auch einen Scharnierbolzen, mit einer an einem Maschinenteil, wie Blechwand oder Türblatt, festlegbaren Führungshülse, in der ein Rastbolzen axial gegen Federkraft verschieblich geführt ist, und mit einer Handhabe, die von der Außenfläche der Führungshülse axial geführt ist.

### Stand der Technik

Ein solcher Rastbolzen ist aus der EP 2175093A2 bereits bekannt.

Nachteilig beim Stand der Technik ist, dass zur Festlegung der Führungshülse an dem Maschinenteil, oder einer dünnen Wand oder Türblatt, ein Zwischenteil mit einer Ausnehmung versehen werden muss, außerdem ist für die Montage die Führungshülse mit einem Außengewinde zu versehen, mit der der Rastbolzen in einen Machinenteil eingeschraubt werden muss, was die Anbringung einer Gewindebohrung erfordert und auch eine erschwerte Montage nach sich zieht.

### Aufgabe der Erfindung

Aufgabe der Erfindung ist es, eine Weiterbildung des bekannten Rastbolzens zu schaffen, die diese Nachteile nicht aufweist und außerdem so eine weitere Ausführungsform gewonnen wird.

### Lösungswege

Gelöst wird die Aufgabe dadurch, dass die Führungshülse mit einem Kopf versehen ist, der eine Außenschulter darstellt, mit der sich die Führungshülse auf dem Maschinenteil festlegt.

Durch diese Maßnahmen werden weitere Anwendungsfälle verwirklicht, wobei die Montage vereinfacht ist, weil das umständliche Aufschrauben und Einschrauben der Führungshülse in eine Gewindebohrung des Maschinenteils entbehrlich ist.

Gemäß einer Weiterbildung trägt die Führungshülse auch axial verschieblich einen Zwischenring, welche Führungshülse sich einerseits auf der Handhabe, andererseits auf dem Maschinenteil, wie dünnes Blech, federnd anlegt.

Gemäß einer anderen Weiterbildung trägt das hintere Ende des Rastbolzens einen Sicherungsring in einer Ringnut, welcher Sicherungsring eine Begrenzung der Axialbewegung des Raststiftes bewirkt, zum einen durch die Führungshülse, zum anderen durch die Handhabe.

Gemäß einer noch anderen Ausführungsform ist die Führungshülse zweiteilig und lässt sich so noch einfacher montieren.

Anstelle des Sicherungsringes können von der Handhabe ausgehende Federbeine in die Ringnut einschnappen, wobei die Handhabe am Maschinenteil festgelegt ist, beispielsweise durch zwei Kopfschrauben oder durch Federdruck.

Gemäß einer anderen Ausführungsform ist der Kopf der Führungshülse in eine Einsenkung oder Verkröpfung des Maschinenteils oder des Bleches aufnehmbar.

Gemäß einer anderen Ausführungsform weist die Führungshülse einen Kopf mit zwei im Abstand zueinander angeordneten vorstehenden Ringen auf, die zwischen sich das Maschinenteil oder das Blech aufnehmen.

Der Rastbolzen mit seinem Kopf kann in der Führungshülse angeordnet sein, während das andere Ende des Rastbolzens mit einer Mutter oder mit einem Sicherungsring gehalten wird, die bzw. der auf der Handhabe aufliegt.

### Kurze Beschreibung der Zeichnungen

Die Erfindung wird nachfolgend anhand von Zeichnungen näher erläutert.

Es zeigt:
- Fig. 1A: eine auseinander gezogene Ansicht auf die Einzelteile des Rastbolzens in einer ersten Ausführungsform;
- Fig. 1B: eine Seitenansicht des in einer dünnen Wand montierten erfindungsgemäßen Rastbolzens;
- Fig. 1C: eine Seitenansicht des nicht montierten Rastbolzens;
- Fig. 1D: den Rastbolzen gemäß Fig. 1C jedoch mit anders eingestellter Führungshülse;
- Fig. 1E: eine Schnittansicht in Axialrichtung durch die Anordnung der Fig. 1D;
- Fig. 2A bis 2E: entsprechende Ansichten einer anderen Ausführungsform;
- Fig. 2F: ein Schnittdarstellung durch die Anordnung gemäß Fig. 1D;
- Fig. 3A: eine weitere Ausführungsform des Rastbolzens, in einer Seitenansicht mit aufgebrochenem Teil und mit Befestigung mittels zweier Kopfschrauben;
- Fig. 3B: eine Schnittansicht durch die in Fig. 3A dargestellten Ausführungsform;
- Fig. 3C: eine Seitenansicht des Rastbolzens;
- Fig. 4: eine Seitenansicht einer weiteren Ausführungsform;
- Fig. 5: eine Seitenansicht eines Rastbolzens in Kombination mit der dünnen Wand bei der die dünne Wand des Maschinenteils gekröpft ist;
- Fig. 6A: in Seitenansicht die drei zu montierenden Teile,
- Fig. 6B: vor Montage in einem dünnen Blech;
- Fig. 7A bis 7C: vor und nach Montage;
- Fig. 8A, 8B: in Ausrichtstellung und Lösestellung;
- Fig. 9A bis 9C: Rastbolzen mit einliegendem Hülsenkopf mit Mutter und mit Sicherungsfeder in Nut gesichert;
- Fig. 10A bis 10F: eine weitere Ausführungsform, die als Scharnier dient.

### Detaillierte Beschreibung des Gegenstands

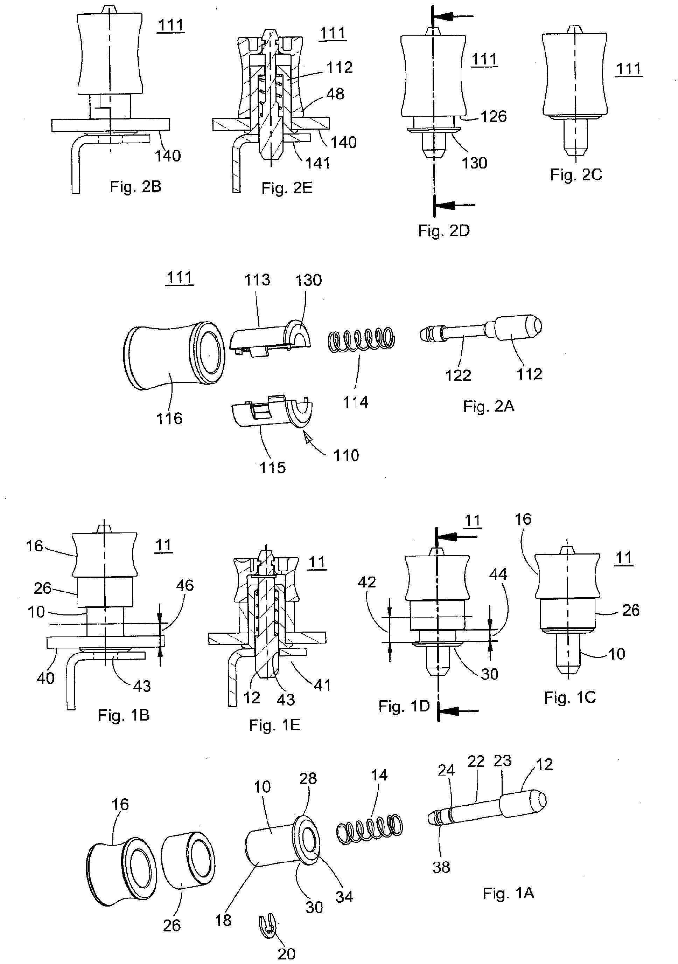

Fig. 1A zeigt eine auseinander gezogene Ansicht auf die Einzelteile des Rastbolzens 12 in einer ersten Ausführungsform. Wie die Fig. 1 erkennen lässt besteht der Rastbolzen aus einer Führungshülse 10, in der ein Raststift oder Rastbolzen 12 axial gegen die Kräfte der Feder 14 verschieblich geführt ist, und aus einer Handhabe 16, die von der Außenfläche der Führungshülse 10 axial geführt ist.

Das hintere Ende des Bolzens 12 ist mit einer Ringnut 24 für einen Sicherungsring 20 versehen, der ein Herausgleiten des Rastbolzens 12 aus der Führungshülse 10 verhindert. Außerdem ist ein Zwischenstück 26 vorgesehen, welches axial verschieblich auf der Außenfläche 18 der Führungshülse 10 geführt ist.

Fig. 1E zeigt in einer axialen Schnittansicht den Aufbau und die Anwendung gemäß den Fig. 1A bis 1D.

Erfindungsgemäß weist die Führungshülse 10 auch einen Zwischenring 26 auf. Der Zwischenring 26 ist auf der Führungshülse axial verschieblich, wobei das Zwischenstück 26 sich einerseits an der Handhabe 16 anlegt, andererseits an dem Kopf 28, dessen Außenschulter 30 das Zwischenstück 26 stützt.

Fig. 1B zeigt den in einer Ausrichtanordnung 11 montierten Rastbolzen oder Raststift 12 und die Handhabe 16, die durch Federdruck der Feder 14 auf der Schulter 28 des Rastbolzens 12 aufliegt und in Richtung auf die dünne Wand 40 getrieben wird, wie Fig. 1E zeigt.

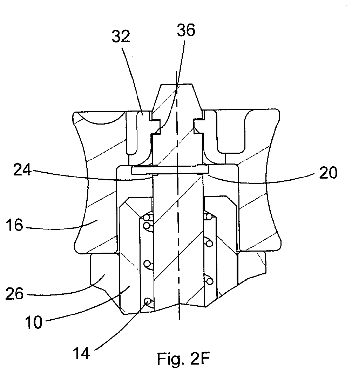

Während beim Stand der Technik die Führungshülse ein Außengewinde hat, mit dem sie in eine entsprechende Gewindebohrung in der dünnen Wand 40 eingeschraubt wird und dann mit einer Kontermutter gesichert wird, erfolgt die Montage beim erfindungsgemäßen Rastbolzen 12 wie folgt:
Bei der Ausführungsform gemäß Fig. 1A bis 1E und 2F:
1. Aufstecken der Feder 14 auf das dünnere, hintere Ende 22 des Rastbolzens 12 bis zum Anliegen des Federendes an der Schulter 23, gebildet durch Durchmesservergrößerung des Rastbolzens 12 am Vorderende.
2. Aufstecken der Führungshülse auf die Feder.
3.Seitliches Aufschieben des Sicherungsringes 20 in die Nut 24 am Hinterende des Rastbolzens.
   Einstecken des Hinterendes der Führungshülse 10, abhängig von der Dicke 46 des Maschinenteils oder Wand 40 (Fig. 1B).
4. Aufschieben eines optionalen Zwischenstücks 26 geeigneter axialer Länge bis zum Anliegen des Kopfes 28 der Führungshülse 10 an dem Maschinenteil oder Wand 40.
5. Aufschieben der Handhabe 16 auf das Ende dieser Führungshülse.
6. Handhabe unter axialen Druck setzen bis zum Einschnappen von vom Inneren der Handhabe ausgehenden Federbeinen 32 in eine weitere näher am Ende des Rastbolzens angebrachte Ringnut (Fig. 2F).
7. Platzieren des die Ausrichteinrichtung 19, 119 tragenden Maschinenteils, wie dünne Wand 40, 140 und Ausrichten des weiteren Maschinenteils 41, 141 bezüglich des ersterwähnten Maschinenteils 40, 140 durch Einführen des Raststiftes 112 in die Ausrichtbohrung 43.

Bei der Ausführungsform gemäß den Figuren 2A bis Fig. 2F ist die Anzahl der Montageschritte geringer. Die Führungshülse wird mit der Feder 114 verklipst, insbesondere die Aufbringung der Sicherungsscheibe entfällt. Die zweiteilige Führungshülse 110, 210 lässt sich durch Verklipsen der zwei Teile 113, 115 um das Hinterende 122 des Raststiftes 112 so montieren, dass die Wand 140 zwischen Kopf 130 der zusammengeklipsten zwei Teile 113, 115 der Führungshülse 110 und der Auflagefläche 48 der unter Spannung der Spiraldruckfeder 114 stehenden Handhabe 116 zu liegen kommt.

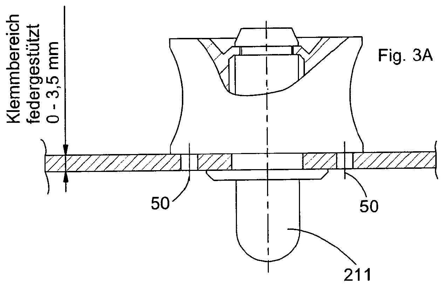

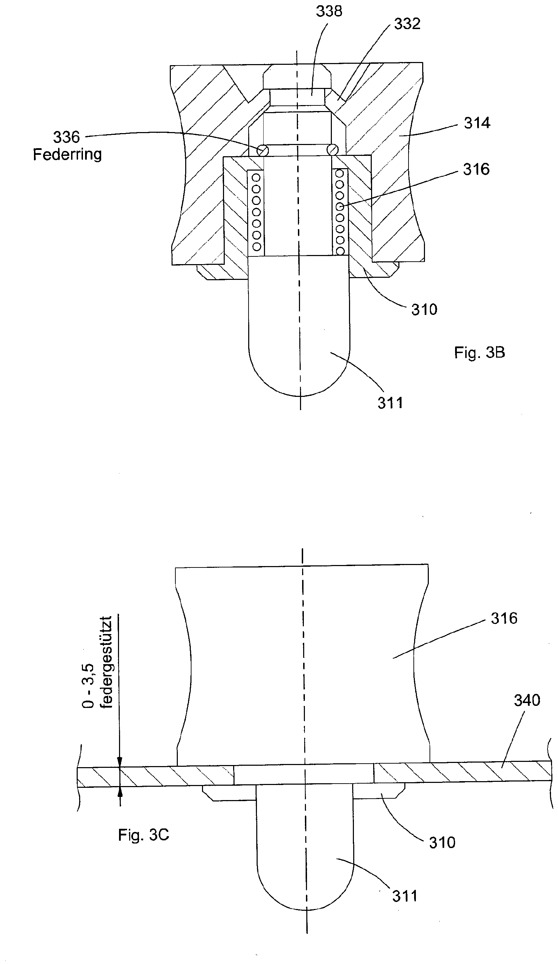

Fig. 3A zeigt, die Ausführungsform eines Raststiftes 211, der einen flexiblen Klemmbereich besitzt. Die Handhabe liegt federgestützt auf der Wand auf.

Die Ausführungsformen gemäß den Fig. 3B bis 3C tragen einen Raststift 311, der durch einen Federring 336 gestützt wird. Die Handhabe 316 stützt sich mit Federbeinen 332 ab, die in eine Ringnut 338 einrasten.

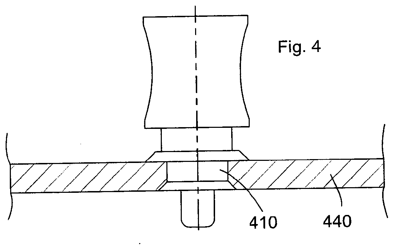

Fig. 4 zeigt eine Ausführungsform, bei der die Führungshülse 410 sich beidseitig auf der dünnen Wand 440 abstützt.

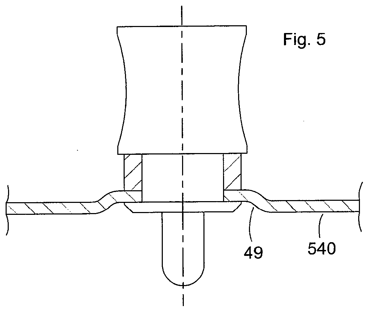

Statt dessen ist in Fig. 5 der Rastbolzen dadurch gekennzeichnet, dass der Kopf der Führungshülse 510 in eine Einsenkung oder Verkröpfung 49 des Maschinenteils oder des Bleches 540 aufnehmbar ist.

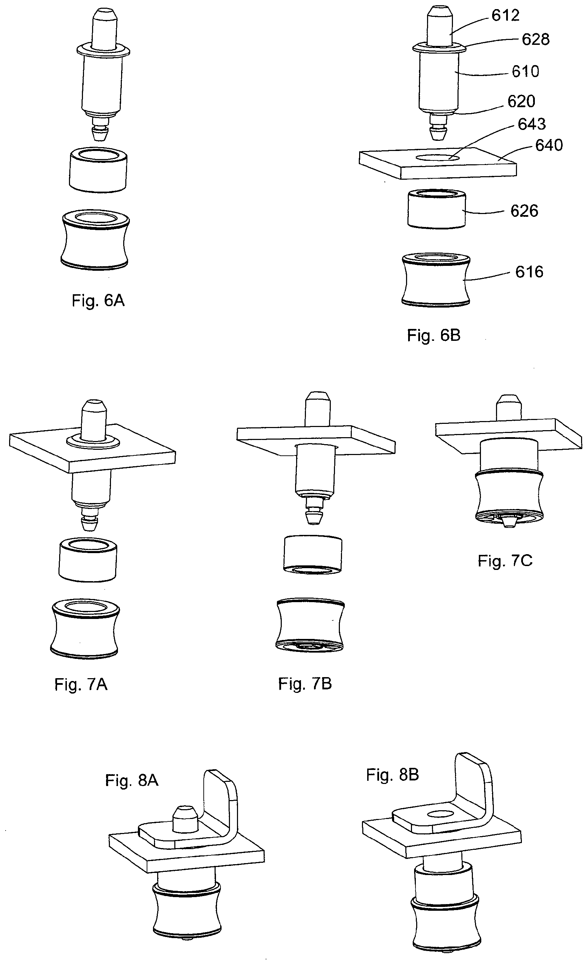

In den Fig. 6A, 6B, 7A und 7C und 8A und 8B sind Ausführungsformen dargestellt, die dadurch gekennzeichnet sind, dass die Führungshülse 610 einen Kopf 628 mit zwei im Abstand zueinander angeordneten Ringen 628, 620 aufweist, die zwischen sich das Maschinenteil oder Blech 640 aufnehmen.

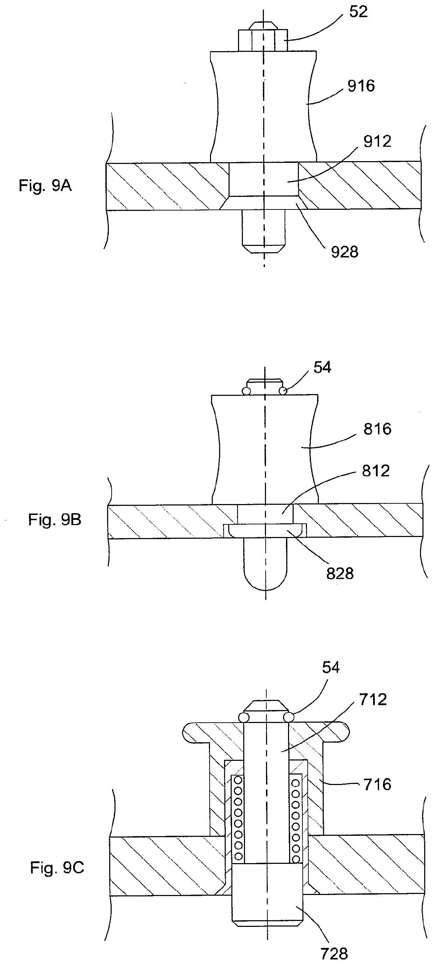

Fig. 9A, 9B und 9C zeigen, dass der Raststift 712, 812, 912 mit seinem Kopf 728 in der Führungshülse 710 angeordnet ist, während das andere Ende des Raststiftes 712 mit einer Mutter 52 oder mit einem Sicherungsring 54 gehalten wird, die bzw. der auf der Handhabe 716, 816, 916 aufliegt.

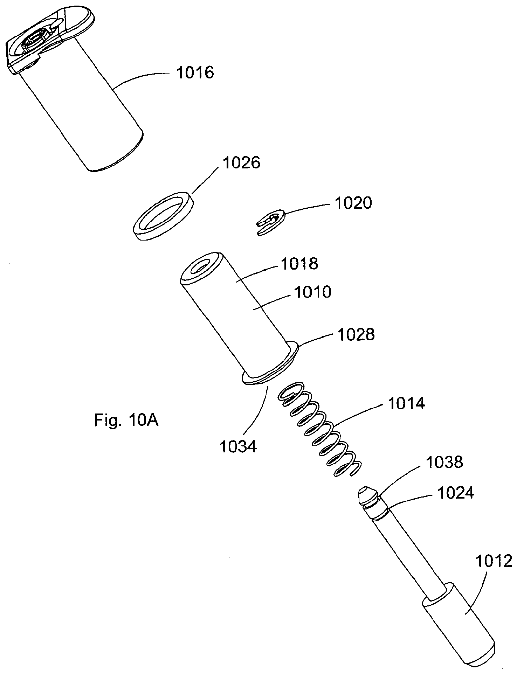

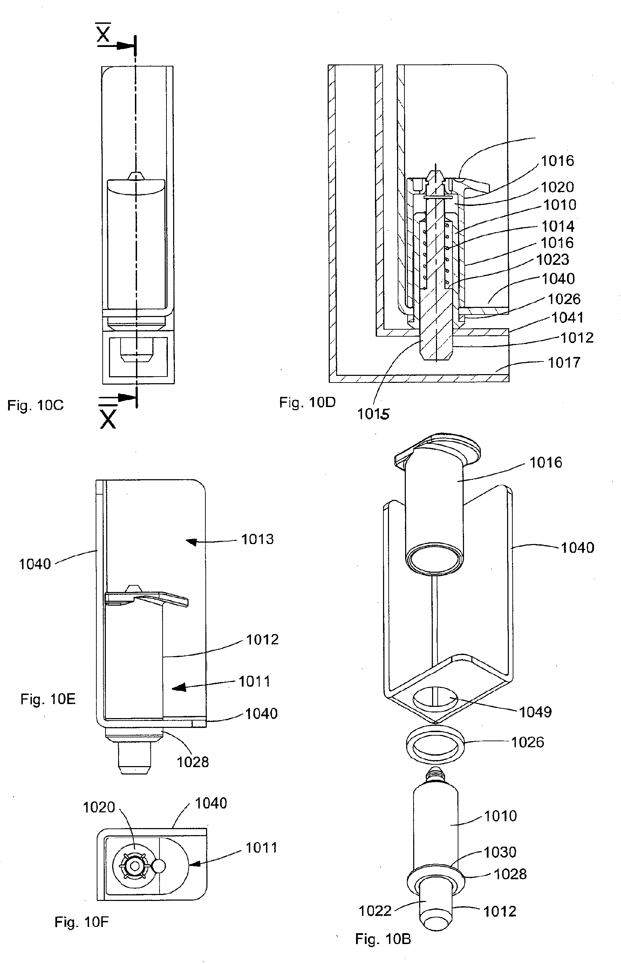

Fig. 10A zeigt eine auseinander gezogene Ansicht auf die Einzelteile des Rastbolzens 1012 für ein Einhängscharnier als eine weitere Ausführungsform. Wie die Fig. 10A erkennen lässt besteht das Rastbolzenscharnier aus einer Führungshülse 1010, in der ein Raststift oder Rastbolzen 1012 axial gegen die Kräfte der Feder 1014 verschieblich geführt ist, und aus einer Handhabe 1016, die von der Außenfläche der Führungshülse 1010 axial geführt ist und von der Abkantung seitlich gehalten wird, so dass sie sich nicht verdrehen kann.

Das hintere Ende des Bolzens 1012 ist mit einer Ringnut 1024 für einen Sicherungsring 1020 versehen, der ein Herausgleiten des Rastbolzens 1012 aus der Führungshülse 1010 verhindert. Außerdem ist ein optionales Zwischenstück 1026 vorgesehen, welches axial verschieblich auf der Außenfläche 1018 der Führungshülse 1010 geführt ist.

Fig. 10D zeigt in einer axialen Schnittansicht entlang der Schnittlinie XX der Fig. 10C den Aufbau und die Anwendung gemäß den Fig. 10A bis 10F.

Erfindungsgemäß weist die Führungshülse 1016 auch einen Zwischenring 1026 auf. Der Zwischenring 1026 ist auf der Führungshülse 1016 axial verschieblich, wobei das Zwischenstück 1026 sich einerseits an dem Türblatt 1040 anlegt, andererseits an dem Kopf 1028, dessen Außenschulter 1030 das Zwischenstück 1026 stützt.

Fig. 10E und 10F zeigt den in einer Scharnieranordnung 1011 montierten Rastbolzen oder Raststift 1012 und die Handhabe 1016, die durch Federdruck der Feder 1014 auf der Schulter 1028 des Rastbolzens 1012 aufliegt und in Richtung auf die dünne Wand 1040 der Blechschranktür 1013 getrieben wird, wie Fig. 10D zeigt. Der Rastbolzen reicht in eine Lageröffnung 1015 des Türrahmens 1917 hinein.

Während beim Stand der Technik die Führungshülse ein Außengewinde hat, mit dem sie in eine entsprechende Gewindebohrung in der dünnen Wand 1040 eingeschraubt wird und dann mit einer Kontermutter gesichert wird, erfolgt die Montage beim erfindungsgemäßen Rastbolzen 1012 bei der Ausführungsform gemäß Fig. 10A bis 10F wie folgt:
1. Aufstecken der Feder 1014 auf das dünnere, hintere Ende 1022 des Rastbolzens 1012 bis zum Anliegen des Federendes an der Schulter 1023, gebildet durch Durchmesservergrößerung des Rastbolzens 1012 am Vorderende.
2. Aufstecken der Führungshülse 1010 auf die Feder 1014.
3.Seitliches Aufschieben des Sicherungsringes 1020 in die Nut 1024 am Hinterende des Rastbolzens 1012.
   Einstecken des Hinterendes der Führungshülse 1010, abhängig von der Dicke 46 des Maschinenteils (Türblatts) oder Wand 40 (Fig. 10D).
4. Aufschieben eines Zwischenstücks 1026 geeigneter axialer Länge bis zum Anliegen des Kopfes 1028 der Führungshülse 1010 an dem Türblatt oder Wand 40.
5. Aufschieben der Handhabe 1016 auf das Ende dieser Führungshülse 1010.
6. Handhabe unter axialen Druck setzen bis zum Einschnappen von vom Inneren der Handhabe ausgehenden Federbeinen 1032 in eine weitere näher am Ende des Rastbolzens angebrachte Ringnut (Fig. 10D).
7. Platzieren der die Scharniereinrichtung 1019 zweifach tragenden Tür, bezüglich des Türrahmens 1017 durch Einführen des Raststiftes 1012 in die Ausrichtbohrung 1043 in der oberen und unteren Ecke des Rahmens.

### Gewerbliche Auswertbarkeit

die Erfindung ist im Schaltschrankbau gewerblich auswertbar.

### Bezugszeichenliste:

- 10, 110, 1010: Führungshülse
- 11, 111, 1011: Ausrichtanordnung
- 12, 112, 1012: Rastbolzen
- 113: Teil der Führungshülse
- 14, 1014: Feder
- 115: Teil der Führungshülse
- 16, 1016: Handhabe
- 18, 1018: Außenfläche
- 20, 1020: Sicherungsring
- 22, 1022: hinteres Ende des Rastbolzens
- 23, 1023: Schulter
- 24, 1024: Nut
- 26, 1026: Zwischenstück
- 28, 1028: Kopf
- 30, 1030: Innenschulter
- 32, 1032: Federbein
- 34, 1034: Außenschulter
- 36, 1036: Ringnut für Sicherungsscheibe
- 38, 1038: Ringnut für Federbeine
- 40, 140, 1040: Maschinenteil, dünne Wand, Türblatt
- 41, 1041: einzurastendes Bauteil
- 42, 1042: Abstand
- 43, 1043: Ausrichtbohrung
- 44: Abstand
- 46: Abstand
- 48: stabilisierendes Aufliegen
- 49: Verkröpfung
- 50: Schrauben
- 52: Mutter
- 54: Federung

## Patentansprüche

1. Rast- oder Scharnierbolzen (10, 1012), mit einer an einem Maschinenteil, wie Blechwand (40) oder Türblatt (140), festlegbaren Führungshülse (10, 1010), in der ein Rastbolzen (12, 1012) axial gegen Federkraft (14, 1014) verschieblich geführt ist, und mit einer Handhabe (16, 1016), die von der Außenfläche der Führungshülse (1010) axial geführt ist, **dadurch gekennzeichnet, dass** die Führungshülse (10, 1010) einen Kopf (28, 1028) aufweist, der eine Außenschulter (34, 1034) darstellt, mit dem sich die Führungshülse (10, 1010) auf dem Maschinenteil (40, 1040) festlegt.

2. Rastbolzen nach Anspruch 1, **dadurch gekennzeichnet, dass** die Führungshülse (10, 1010) auch einen Zwischenring (26, 1026) axial verschieblich trägt, der sich einerseits auf der Handhabe (16, 1016), andererseits auf dem Maschinenteil, wie dünnes Blech oder Türblatt (40, 1040), federnd anlegt.

3. Rastbolzen nach Anspruch 1 oder 2, **dadurch gekennzeichnet, dass** hintere Ende des Rastbolzens (12, 1012) einen Sicherungsring (20, 1020) in einer Ringnut (24, 1024) trägt, der eine Begrenzung der Axialbewegung des Rastbolzens (12, 1012) bewirkt, zum einen durch die Führungshülse (10, 1010) zum anderen durch die Handhabe (16, 1016).

4. Rastbolzen nach Anspruch 1, 2 oder 3, **dadurch gekennzeichnet, dass** die Führungshülse zweiteilig (113, 115) ist.

5. Rastbolzen nach Anspruch 3, **dadurch gekennzeichnet, dass** anstelle des oder zusätzlich zu dem Sicherungsring(es) von der Handhabe (16, 1016) ausgehende Federn (32, 1032) in die Ringnut (36, 38, 1036, 1038) einrasten, wobei die Handhabe (16) am Maschinenteil (40) festgelegt ist, beispielsweise durch zwei Kopfschrauben oder durch Federdruck gehalten wird.

6. Rastbolzen nach Anspruch 2, **dadurch gekennzeichnet, dass** der Kopf (28, 1028) der Führungshülse (10, 1010) in eine Einsenkung oder Verkröpfung (49) des Maschinenteils oder des Bleches (40) oder der Tür (1040) aufnehmbar ist.

7. Rastbolzen nach Anspruch 1, **dadurch gekennzeichnet, dass** die Führungshülse (10, 1010) einen Kopf mit zwei im Abstand zueinander angeordneten Ringen aufweist, die zwischen sich das Maschinenteil oder das Blech (40) aufnehmen.

8. Rastbolzen nach Anspruch 1, **dadurch gekennzeichnet, dass** der Rastbolzen mit seinem Kopf (28) in der Führungshülse (10) angeordnet ist, während das andere Ende des Rastbolzens (12) mit einer Mutter (52) oder mit einem Sicherungsring (36) gehalten wird, die bzw. der auf der Handhabe (16) aufliegt.

9. Rast- oder Scharnierbolzen (12, 1012) nach Anspruch 1, **dadurch gekennzeichnet, dass** der Kopf (28, 1028) eine Handhabe (16, 1016) bildet, die an den Abkantungsbereich der Tür (1040) angepasst ist.

10. Rast- oder Scharnierbolzen (12, 1012) nach Anspruch 9, **dadurch gekennzeichnet, dass** der Kopf (28, 1028) über den Bolzenquerschnitt herausragenden Beine aufweist.

11. Rast- oder Scharnierbolzen (12, 1012) nach Anspruch 8, 9 oder 10, **dadurch gekennzeichnet, dass** der Kopf (28, 1028) mit der Hülse einstückig ist.

12. Rast- oder Scharnierbolzen (12, 1012) nach einem der Ansprüche 9 bis 11, **dadurch gekennzeichnet, dass** der Kopf (28, 1028) nicht rund ist, insbesondere an die innerhalb der Abkantung des Türblatts (40) eingepasst ist.

13. Rast- oder Scharnierbolzen (12, 1012) nach Anspruch 1, **dadurch gekennzeichnet, dass** die Führungshülse zwei Ringnuten (36, 38; 1036, 1038) aufweist, eine (36, 1036) für den Sicherungsring und eine (32, 1032) für die Federbeine (38, 1038).

## Claims

1. Locking or hinge bolt (10, 1012), with a guide sleeve (10, 1010) that can be fixed on a machine part, such as sheet metal wall (40) or door leaf (140), in which a locking bolt (12, 1012) is axially guided against spring force (14, 1014), and having a handle (16, 1016) which is axially guided by the outer surface of the guide sleeve (1010), **characterised in that** the guide sleeve (10, 1010) has a head (28, 1028), which constitutes an outer shoulder (34, 1034), with which the guide sleeve (10, 1010) is fixed on the machine part (40, 1040).

2. Locking bolt according to Claim 1, **characterised in that** the guide sleeve (10, 1010) also axially displaceably carries an intermediate ring (26, 1026), which is resiliently applied on the one hand on the handle (16, 1016) and on the other hand on the machine part, such as the thin metal sheet or door leaf (40, 1040).

3. Locking bolt according to Claim 1 or 2, **characterised in that** the rear end of the locking bolt (12, 1012) carries a retaining ring (20, 1020) in an annular groove (24, 1024), which causes a limitation of the axial movement of the locking bolt (12, 1012) on the one hand through the guide sleeve (10, 1010) and on the other through the handle (16, 1016).

4. Locking bolt according to Claim 1, 2 or 3, **characterised in that** the guide sleeve is in two parts (113, 115).

5. Locking bolt according to Claim 3, **characterised in that** instead of or in addition to the retaining ring, springs (32, 1032) starting from the handle (16, 1016) engage in the annular groove (36, 38, 1036, 1038), wherein the handle (16) is fixed on the machine part (40), for example, by two cap screws or held by spring pressure.

6. Locking bolt according to Claim 2, **characterised in that** the head (28, 1028) of the guide sleeve (10, 1010) can be received in a recess or offset section (49) of the machine part or the metal sheet (40) or of the door (1040).

7. Locking bolt according to Claim 1, **characterised in that** the guide sleeve (10, 1010) has a head having two spaced apart rings, between which the machine part or the metal sheet (40) is received.

8. Locking bolt according to Claim 1, **characterised in that** the locking bolt is arranged with its head (28) in the guide sleeve (10), while the other end of the locking bolt (12) is held with a nut (52) or with a retaining ring (36), which rest on the handle (16).

9. Locking or hinge pin (12, 1012) according to Claim 1, **characterised in that** the head (28, 1028) forms a handle (16, 1016) which is adapted to the angled region of the door (1040).

10. Locking or hinge bolt (12, 1012) according to Claim 9, **characterised in that** the head (28, 1028) has legs projecting over the bolt cross-section.

11. Locking or hinge bolt (12, 1012) according to Claim 8, 9 or 10, **characterised in that** the head (28, 1028) is integral with the sleeve.

12. Locking or hinge bolt (12, 1012) according to any one of Claims 9 to 11, **characterised in that** the head (28, 1028) is not round, in particular is fitted to the inside of the angle of the door leaf (40).

13. Locking or hinge bolt (12, 1012) according to Claim 1, **characterised in that** the guide sleeve has two annular grooves (36, 38; 1036, 1038), one (36, 1036) for the retaining ring and one (32, 1032) for the spring struts (38, 1038).

## Revendications

1. Boulon d'arrêt ou de charnière (10, 1012), comprenant une douille de guidage (10, 1010) pouvant être calée au niveau d'une partie de machine, telle qu'une paroi en tôle (40) ou un panneau de porte (140), dans laquelle un boulon d'arrêt (12, 1012) est guidé en coulissement dans le sens axial contre une force de ressort (14, 1014), et comprenant une manette (16, 1016) qui est guidée dans le sens axial par la surface extérieure de la douille de guidage (1010), **caractérisé en ce que** la douille de guidage (10, 1010) possède une tête (28, 1028) qui représente un épaulement externe (34, 1034) avec lequel la douille de guidage (10, 1010) se cale sur la partie de machine (40, 1040).

2. Boulon d'arrêt selon la revendication 1, **caractérisé en ce que** la douille de guidage (10, 1010) comporte également une bague intermédiaire (26, 1026) coulissante dans le sens axial, laquelle repose élastiquement d'un côté sur la manette (16, 1016), de l'autre côté sur la partie de machine, telle qu'une tôle fine ou un panneau de porte (40, 1040).

3. Boulon d'arrêt selon la revendication 1 ou 2, **caractérisé en ce que** l'extrémité arrière du boulon d'arrêt (12, 1012) comporte un circlip (20, 1020) dans une rainure annulaire (24, 1024), lequel produit une limitation du mouvement axial du boulon d'arrêt (12, 1012), d'une part via la douille de guidage (10, 1010) et d'autre part via la manette (16, 1016).

4. Boulon d'arrêt selon la revendication 1, 2 ou 3, **caractérisé en ce que** la douille de guidage est en deux parties (113, 115).

5. Boulon d'arrêt selon la revendication 3, **caractérisé en ce qu'**à la place ou en complément du circlip, des ressorts (32, 1032) sortant de la manette (16, 1016) s'enclipsent dans la rainure annulaire (36, 38, 1036, 1038), la manette (16) étant calée sur la partie de machine (40), par exemple par deux vis à tête ou par pression de ressort.

6. Boulon d'arrêt selon la revendication 2, **caractérisé en ce que** la tête (28, 1028) de la douille de guidage (10, 1010) peut être accueillie dans un matriçage ou un coudage (49) de la partie de machine ou de la tôle (40) ou de la porte (1040).

7. Boulon d'arrêt selon la revendication 1, **caractérisé en ce que** la douille de guidage (10, 1010) possède une tête pourvue de deux anneaux disposés espacés l'un de l'autre, lesquels accueillent entre eux la partie de machine ou la tôle (40).

8. Boulon d'arrêt selon la revendication 1, **caractérisé en ce que** le boulon d'arrêt est disposé par sa tête (28) dans la douille de guidage (10), alors que l'autre extrémité du boulon d'arrêt (12) est maintenue avec un écrou (52) ou avec un circlip (36) qui repose sur la manette (16).

9. Boulon d'arrêt ou de charnière (12, 1012) selon la revendication 1, **caractérisé en ce que** la tête (28, 1028) forme une manette (16, 1016) qui est adaptée à la zone de chanfrein de la porte (1040).

10. Boulon d'arrêt ou de charnière (12, 1012) selon la revendication 9, **caractérisé en ce que** la tête (28, 1028) possède des branches qui font saillie au-dessus de la section transversale du boulon.

11. Boulon d'arrêt ou de charnière (12, 1012) selon la revendication 8, 9 ou 10, **caractérisé en ce que** la tête (28, 1028) est réalisée d'un seul tenant avec la douille.

12. Boulon d'arrêt ou de charnière (12, 1012) selon l'une des revendications 9 à 11, **caractérisé en ce que** la tête (28, 1028) n'est pas ronde, notamment adaptée à celle à l'intérieur du chanfrein du panneau de porte (40).

13. Boulon d'arrêt ou de charnière (12, 1012) selon la revendication 1, **caractérisé en ce que** la douille de guidage possède deux rainures annulaires (36, 38 ; 1036, 1038), une (36, 1036) pour le circlip et une (32, 1032) pour les branches de ressort (38, 1038).
